# EUROPEAN PATENT APPLICATION

(11) **EP 4 813 585 A1**
(43) Date of publication of application: **30.09.2026**
(21) Application number: 23959471.6
(22) Date of filing: 22.11.2023
(51) Int. Cl.: B25J 13/08, B25J 15/04

(54) **ROBOTIC SYSTEM, MEASUREMENT SYSTEM, CONTROL METHOD, AND MEASUREMENT METHOD**

(71) Applicant: NIKON CORPORATION, Tokyo 140-8601 (JP)
(72) Inventor: KAMBAYASHI, Minoru, Tokyo 108-6290 (JP); ONO, Akito, Tokyo 108-6290 (JP); KAKEDA, Takafumi, Tokyo 108-6290 (JP)
(74) Representative: Hoffmann Eitle
(86) International application number: PCT/JP2023/042054
(87) International publication number: WO 2025/109728

(57) **Abstract**

A robotic system is configured to include a robot capable of connecting and detaching any of at least one tool capable of performing a process on an object; at least one reference member including at least one tool stand reference member on a tool stand capable of holding any of the at least one tool; a measurement device that outputs a measurement result obtained by measuring the position of each tool stand reference member; and a control device that generates control information used to control the robot, based on the measurement result.

## Description

### FIELD

The present disclosure relates to a robotic system, a measurement system, a control method, and a measurement method.

### BACKGROUND

A system that measures the position of part of a robot with a measurement device has been proposed (e.g., see Patent Literature 1).

### CITATION LIST

### PATENT LITERATURE

Patent Literature 1: International Publication No. 2007/002319

### SUMMARY

A robotic system according to the present disclosure includes a robot capable of connecting and detaching any of at least one tool capable of performing a process on an object; at least one reference member including at least one tool stand reference member on a tool stand capable of holding any of the at least one tool; a measurement device that outputs a measurement result obtained by measuring the position of each tool stand reference member; and a control device that generates control information used to control the robot, based on the measurement result.

A robotic system according to the present disclosure includes a robot capable of connecting and detaching any of at least one tool capable of performing a process on an object; at least one reference member including at least one tool reference member on any of the at least one tool; a measurement device that outputs a measurement result obtained by measuring the position of each tool reference member; and a control device that generates control information used to control the robot, based on the measurement result.

A measurement system according to the present disclosure includes at least one tool stand reference member on a tool stand capable of holding any of at least one tool, a measurement device that outputs a measurement result obtained by measuring the position of each tool stand reference member, and a control device that generates control information based on the measurement result; the tool is connectable to a robot and capable of performing a process on an object while connected to the robot; and the control information is information used to control the robot.

A measurement system according to the present disclosure includes at least one tool reference member on any of at least one tool that is connectable to a robot and capable of performing a process on an object while connected to the robot; a measurement device that outputs a measurement result obtained by measuring the position of each tool reference member; and a control device that generates control information used to control the robot, based on the measurement result.

A robotic system according to the present disclosure includes a robot capable of connecting and detaching a tool capable of performing a process on an object; a movable tool stand that holds the tool; a measurement device that outputs measurement results obtained by measuring the positions of the tool stand and the robot; and a control device that generates tool stand control information used to control the position of the tool stand, based on the measurement results.

A robotic system according to the present disclosure includes a robot capable of connecting and detaching a tool capable of performing a process on an object; at least one reference member including at least one tool stand reference member on a tool stand capable of holding the tool; a measurement device that outputs a measurement result obtained by measuring the position of each tool stand reference member; and a control device including at least one processor and a memory storing at least one computer program code, the control device being configured to generate control information used to control the robot, based on the measurement result, by the at least one processor executing the at least one computer program code.

A robotic system according to the present disclosure includes at least one tool stand reference member on a tool stand capable of holding a tool detached from a robot, the tool being capable of performing a process on an object while connected to the robot; a measurement device that outputs a measurement result obtained by measuring the position of each tool stand reference member; and a control device including at least one processor and a memory storing at least one computer program code, the control device being configured to generate control information used to control the robot, based on the measurement result, by the at least one processor executing the at least one computer program code.

A control method according to the present disclosure includes outputting a measurement result obtained by measuring the position of each of at least one tool stand reference member on a tool stand capable of holding any of at least one tool capable of performing a process on an object; generating control information used to control a robot capable of connecting and detaching the tool, based on the measurement result; and controlling the robot according to the control information.

A control method according to the present disclosure includes outputting a measurement result obtained by measuring the position of each of at least one tool reference member on any of at least one tool; generating control information used to control a robot capable of connecting and detaching the tool, based on the measurement result; and controlling the robot according to the control information.

A measurement method according to the present disclosure includes outputting a measurement result obtained by measuring the position of each of at least one tool stand reference member on a tool stand capable of holding any of at least one tool capable of performing a process on an object; and generating control information used to control a robot capable of connecting and detaching the tool, based on the measurement result.

A measurement method according to the present disclosure includes outputting a measurement result obtained by measuring the position of each of at least one tool reference member on any of at least one tool capable of performing a process on an object; and generating control information used to control a robot capable of connecting and detaching the tool, based on the measurement result.

A control method according to the present disclosure includes outputting measurement results obtained by measuring the position of a tool stand capable of holding any of at least one tool capable of performing a process on an object and the position of a robot capable of connecting and detaching the tool; generating control information used to control the position of the tool stand, based on the measurement result; and controlling the tool stand according to the control information.

### BRIEF DESCRIPTION OF DRAWINGS

FIG. 1 schematically illustrates the overall configuration of a robotic system.
FIG. 2 schematically illustrates the configuration of a measurement device.
FIG. 3 schematically illustrates the general configuration of a control device.
FIG. 4 is a functional block diagram of a processor included in the control device.
FIG. 5 is a flowchart of a control information generation process.
FIG. 6 is an example of a positional relationship between tool stand reference members on a tool stand and tool hold positions.
FIG. 7 is an example of a positional relationship between tool stand reference members on tool holders and tool hold positions.
FIG. 8 is an example of a positional relationship between tool reference members on tools.
FIG. 9 is a flowchart of a control process.

### DESCRIPTION OF EMBODIMENTS

A robotic system, a measurement system, a control method, and a measurement method of the present application will now be described in detail with reference to the drawings.

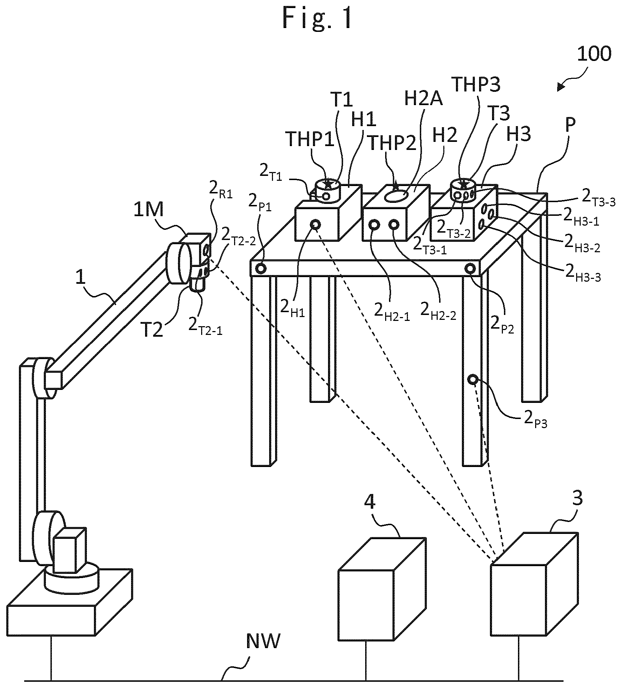

FIG. 1 schematically illustrates the overall configuration of a robotic system.

In the present embodiment, the robotic system 100 includes a robot 1, reference members 2, a measurement device 3, and a control device 4. The robot 1, the measurement device 3, and the control device 4 are communicably connected via a communication network NW. The communication network NW includes a wired local area network. The communication network NW may include a wireless local area network, a wireless wide area network, or other communication networks.

The robot 1 performs predetermined processes on an object, such as various types of processing including cutting, welding, screwing, polishing, and painting, or measurement of various quantities, e.g., shape, position, physical properties, and electrical properties. An object to be processed by the robot 1 can be referred to as a target. The robot 1 performs a process on an object by connecting a tool T corresponding to the process to be performed. More specifically, the robot 1 connects a tool T capable of performing processing or measurement on an object, and performs a process on the object. To perform various processes on an object, the robot 1 is configured to be capable of connecting and detaching tools T depending on the respective processes. For example, each tool T is connected to a moving portion 1M of the robot 1. The moving portion 1M is a movable portion, and the position and orientation of the moving portion 1M of the robot 1 can change. For example, the moving portion 1M can move within a predetermined range based on the position of the robot 1. The robot 1 moves the moving portion 1M connected with a tool T to perform a process on a desired position of an object. The moving portion 1M can also be referred to as a connecting portion for connecting a tool T.

In the present embodiment, a position may be coordinates in three-dimensional space measured by the measurement device 3, i.e., a position in the measurement coordinate system by the measurement device 3; an orientation or a posture may be directions in the respective dimensions (roll, pitch, and yaw). If the measurement coordinate system is a Cartesian coordinate system, a position can be represented by X, Y, and Z in the measurement coordinate system; an orientation or a posture can be represented by θX (rotational position around the X-axis), θY (rotational position around the Y-axis), and θZ (rotational position around the Z-axis).

The reference members 2 are members used as a reference for measurement by the measurement device 3. The reference members 2 may be retroreflective members that reflect light in the direction in which the light is incident. Examples of such retroreflective members include corner cube reflectors and ball reflectors. Such a retroreflective member may be formed of a spherical mounted retroreflector (SMR) composed of a metal sphere and a retroreflector embedded therein. Alternatively, the reference members 2 may be markers with a predetermined pattern represented thereon. The reference members 2 may be members having a feature such as a characteristic shape or pattern of a target for measurement. The reference members 2 can also be referred to as target members used as targets for measurement by the measurement device 3. Any of at least part of a tool stand P, at least part of tool holders H1-H3, and at least part of tools T1-T3 may be used as the reference members 2.

The measurement device 3 measures the positions of the reference members 2, i.e., the coordinates of the reference member 2s in the three-dimensional coordinate system, and outputs the measurement results.

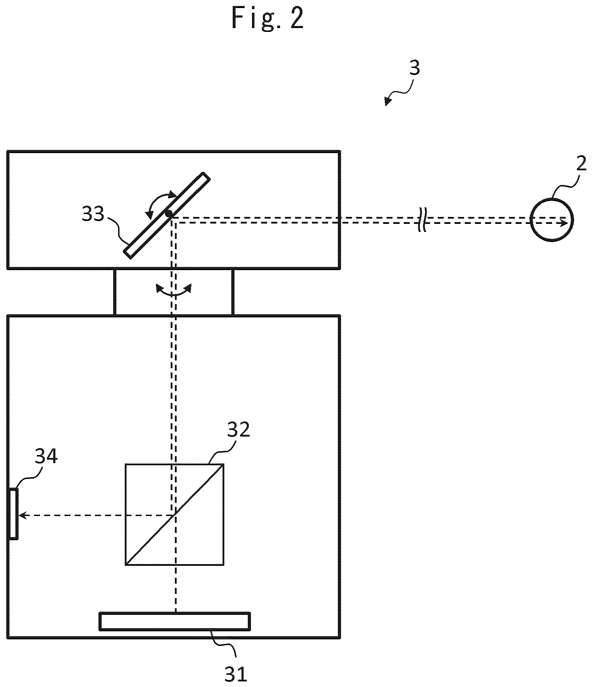

FIG. 2 schematically illustrates the configuration of the measurement device 3. The measurement device 3 includes a light source 31, an optical path splitting member 32, a mirror 33, and a light receiving element 34.

The light source 31 generates, for example, laser light as irradiation light for irradiating the reference members 2 from the measurement device 3. The light source 31 may be an optical comb light source that generates pulsed light including frequency components evenly spaced on the frequency axis. At least part of irradiation light generated by the light source 31 is transmitted through the optical path splitting member 32 and radiates onto the mirror 33. The optical path splitting member 32 is a prism having a splitting plane that transmits part of incident light and reflects part of the light. The optical path splitting member 32 may be a semitransparent mirror having a splitting plane. The mirror 33 is a mirror that reflects at least part of incident light, and is supported so that its direction can change. The reference members 2 are irradiated with the irradiation light reflected by the mirror 33.

The irradiation light radiating onto the reference members 2 is reflected by the reflective surfaces of the reference members 2 in the direction in which the irradiation light is incident. The light reflected by the reference members 2 is incident on the mirror 33, and is reflected by the mirror 33 to be incident on the optical path splitting member 32. Part of the reflected light incident on the optical path splitting member 32 is reflected by the splitting plane of the optical path splitting member 32 to be incident on the light receiving element 34. The light receiving element 34 may be a four-part position sensitive detector (PSD) that detects the position of incident light based on output depending on the amount of incident light of photodiodes respectively arranged on light receiving surfaces divided into four.

The measurement device 3 can obtain the distances to the reference members 2, based on the reflected light received by the light receiving element 34, for example, by interference measurement. The measurement device 3 may obtain the distances to the reference members 2 by triangulation. The measurement device 3 determines the positions of the reference members 2, based on the distances to the reference members 2 and the angles of irradiation light radiating onto the reference members 2 by the mirror 33. The measurement device 3 outputs the positions of the reference members 2, as measurement results, to the control device 4 via the communication network NW.

The control device 4 generates control information used to control the robot 1, based on the measurement results acquired from the control device 4 via the communication network NW. The control device 4 may control the robot 1 according to the generated control information.

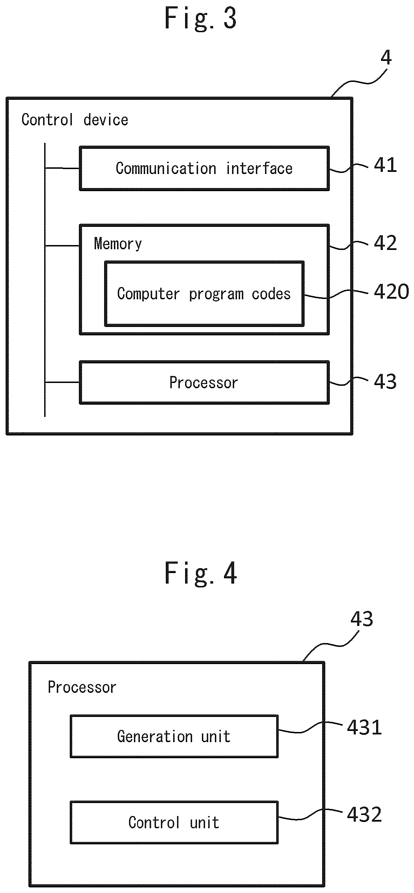

FIG. 3 schematically illustrates the general configuration of the control device 4. The control device 4 is a computer including a communication interface 41, a memory 42, and a processor 43.

The communication interface 41, which is an example of a communication unit, includes an interface circuit for receiving data to be processed by the control device 4 or outputting data processed by the control device 4. The communication interface 41 includes, for example, a communication interface circuit for connecting the control device 4 to the communication network NW.

The memory 42, which is an example of a storage unit, includes volatile and nonvolatile semiconductor memories. The memory 42 stores various types of data used for processes by the processor 43, e.g., measurement results acquired from the measurement device 3, information on the positions and number of reference members, and the like. The memory 42 also stores various computer program codes 420, e.g., control computer program codes for executing a control process. The computer program codes 420 provide logic and routines that enable the processes described below to be executed.

The processor 43, which is an example of a control unit, includes one or more processors and a peripheral circuit thereof. The processor 43 may further include another operating circuit, such as a logic unit, an arithmetic unit, or a graphics processing unit. The control device 4 executes various processes described in the present embodiment by the processor 43 executing the computer program codes 420 stored in the memory 42. As a result, logical functional blocks for executing operation to be executed by the control device 4 may be achieved in the processor 43. In this way, the processor 43 can function as a controller for achieving logical functional blocks for executing operation to be executed by the control device 4. In this case, any device (typically a computer) that executes the computer program 420 can function as the control device 4. At least one of the memory 42 and the processor 43 may be referred to as a control circuit (or a circuit).

FIG. 4 is a functional block diagram of the processor 43 included in the control device 4.

As functional blocks, the processor 43 of the control device 4 includes a generation unit 431 and a control unit 432. These units included in the processor 43 are functional modules implemented by the computer program codes 420 executed by the processor 43. The computer program codes 420 for achieving the functions of the units of the processor 43 may be provided in a form recorded on a computer-readable medium, such as a semiconductor memory, a magnetic recording medium, or an optical recording medium. Alternatively, these units included in the processor 43 may be implemented in the control device 4 as separate integrated circuits, microprocessors, or firmware.

The generation unit 431 generates control information used to control the robot 1, based on measurement results acquired from the measurement device 3.

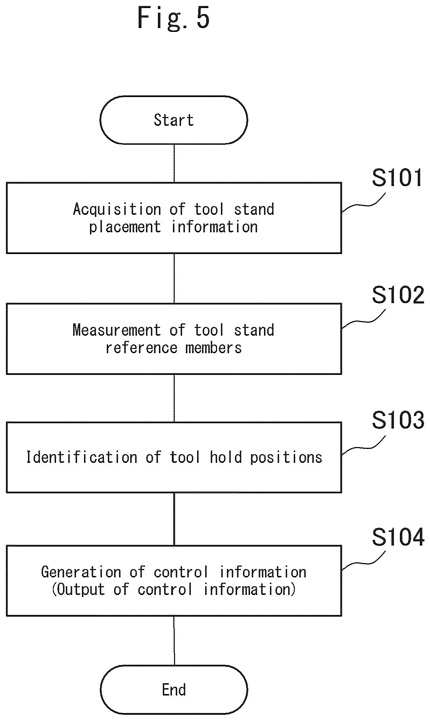

The control unit 432 transmits a control signal representing control information to the robot 1 via the communication network NW, and controls the robot 1. In the following description, the flowchart of FIG. 5 will be referred to as necessary.

Referring to FIG. 1, the tools T in the robotic system 100 include tools T1, T2, and T3. The tools T1, T2, and T3 can be held at predetermined tool hold positions THP1, THP2, and THP3 by tool holders H1, H2, and H3 on the tool stand P, respectively. In other words, the tool stand P is capable of holding the tools at the respective tool hold positions THP1, THP2, and THP3. It can be said that these tool hold positions are the positions of the tools held by the tool holders. Each tool hold position may be set, for example, to indicate the center position of a connection surface where the tool is connected to the moving portion 1M of the robot 1 when the tool is held by the tool holder. In this case, the tool hold position is defined as the position of a contact portion between the tool and the tool holder for the case where the tool is held by the tool holder plus the offset between this contact portion and the connection surface. The tools T1, T2, and T3 can be connected to the robot 1 at the moving portion 1M of the robot 1. In the robotic system 100 in the state shown in FIG. 1, the tools T1 and T3 are held at the tool hold positions THP1 and THP3 on the tool stand P, respectively, and the tool T2 is connected to the robot 1. Hold of a tool can also be referred to as placement of a tool. The robotic system 100 may include the tool stand P.

The tools T1, T2, and T3 are tools that perform different processes. At least two of the tools T1, T2, and T3 may be tools that perform the same process. For example, these may all be tools that perform cutting and may be used different numbers of times, or may perform the same process to different degrees (examples of the degrees are the diameters of drills or milling cutters and the accuracies of measurement).

The tool stand P is capable of holding the tools T, which are capable of performing a process on an object while connected the robot 1, with the tools detached from the robot 1.

Each tool holder has a holding portion that holds a tool. Each holding portion may be configured to hold a particular type of tool or to hold a plurality of types of tools.

For example, the tool holder H2 includes a holding portion H2A capable of holding the tool T2. The holding portion H2A is a hole in the upper surface of the tool holder H2, and can accommodate a performing portion of the tool T2 that performs a process on an object. More specifically, the holding portion H2A can hold the tool T2 so as to cover at least part of its lower side when the tool T2 is held by the tool holder H2 with the performing portion facing downwards. In other words, the holding portion H2A can hold the tool T2 so as to cover at least part of its performing portion. Such a holding portion can also be referred to as an attaching portion to which a tool is attached from above.

The holding portion of the tool holder may be capable of holding a tool so as to cover at least part of the upper side of the tool. In this case, the holding portion may be held by the holding portion with the performing portion of the tool facing upwards. Such a holding portion can also be referred to as an attaching portion to which a tool is attached from below. Alternatively, the holding portion of the tool holder may be capable of holding a tool so as to cover at least part of the upper and lower sides of the tool. In the case of such a holding portion, the tool is moved to the tool hold position so as to slide from the front in FIG. 1. Such a holding portion can also be referred to as an attaching portion from which a tool is suspended.

For example, the tool holder H1 has an opening on the left side surface, and holds a tool by approaching the tool hold position THP1 from the left. Alternatively, the tool holder H1 enables the held tool to be connected by approaching the tool hold position THP1 from the left. Thus, for the tool holder H1 having such a structure, the control device 4 may generate control information for causing the moving portion 1M of the robot 1 to approach from the left.

The tool stand P is provided with tool stand reference members 2_{P1}, 2_{P2}, and 2_{P3} at positions having a predetermined positional relationship with the tool hold positions THP1, THP2, and THP3 for holding the tools T1, T2, and T3. The tool stand reference members 2_{P1}, 2_{P2}, and 2_{P3} are an example of the reference members 2. The positional relationship between the tool stand reference members on the tool stand P and the tool hold positions is an example of predetermined information on each tool hold position on the tool stand, and is pre-stored in the memory 42. The positional relationship between the tool stand reference members and the tool hold positions can also be referred to as tool stand placement information. The tool stand placement information may be measured in advance by the measurement device 3 or another measurement device, or may be obtained from design information of the tool stand P. The procedure in which the processor 43 reads out the tool stand placement information stored in the memory 42 may be referred to as acquisition of tool stand placement information (step S101 in FIG. 5).

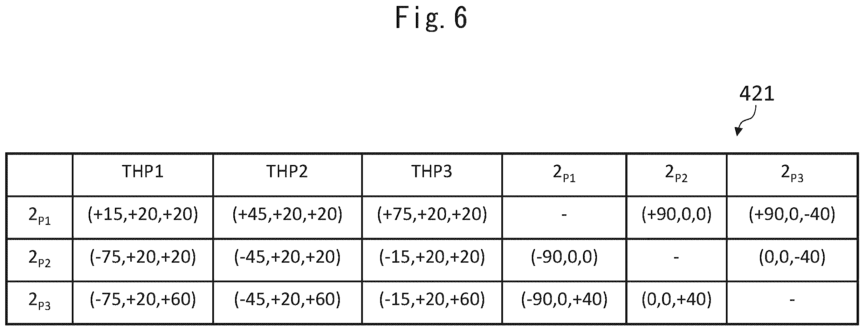

FIG. 6 is an example of a positional relationship between the tool stand reference members on the tool stand P and the tool hold positions. The memory 42 stores the positional relationship 421.

In the positional relationship 421, each row shows the relative positions (x, y, z) of the tool hold positions and the other tool stand reference members with respect to the tool stand reference member shown at the left end of the row. The positional relationship 421 is information on the relative positions of the tool hold positions with respect to the tool stand reference members, and corresponds to predetermined information on the tool hold positions. The relative positions are expressed with the horizontal, depth, and vertical displacements for the case where the tool stand P is observed from the front in FIG. 1 denoted by x (positive on the right), y (positive on the back), and z (positive on the top), respectively. The positional relationship 421 shows that, for example, the tool hold position THP1 is provided 15 to the right, 20 to the back, and 20 above the tool stand reference member 2_{P1}. As will be described below, the positional relationship 421 is subjected to operations such as enlargement/reduction/rotation/translation to match the measured positions of the tool stand reference members. Thus the positional relationship 421 only has to be obtained by observing the tool stand from the same point for all of the tool stand reference members included in the positional relationship 421. However, it is preferable that the observation point of the tool stand P be not a point on a straight line including two of tool stand reference members of interest or a point on a plane including three of them. Further, the values of the relative positions only have to be on a uniform scale for all of the tool stand reference members included in the positional relationship 421.

The measurement device 3 outputs the measurement results obtained by measuring the positions of the tool stand reference members (step S102 in FIG. 5). Information on the position of a tool stand reference member included in a measurement result is an example of information on the tool stand obtained based on the measurement result. The control device 4 refers to the positional relationship 421 between the tool stand reference members and the tool hold positions stored in the memory 42, and identifies the tool hold positions, based on the measurement results of the tool stand reference members. In other words, it can be said that the control device 4 identifies each tool hold position, based on information on the tool stand. It can also be said that the control device 4 identifies each tool hold position, based on information on the tool stand and predetermined information on each tool hold position on the tool stand P. The information on the tool stand may include information on the position and orientation of the tool stand.

The robotic system 100 may include a plurality of tool stands. In this case, the positional relationship 421 represents a positional relationship of at least one tool stand reference member for each tool stand. Varying the positional relationship of the tool stand reference members for each tool stand enables identification of a tool stand based on the measurement results. The information on the tool stand may include identification information of the tool stand. The positional relationship of at least one tool stand reference member of each tool stand can also be referred to as an arrangement pattern.

The control device 4 identifies the tool hold positions, based on the measurement results of the tool stand reference members (step S103 in FIG. 5). For example, the control device 4 executes operations such as enlargement/reduction/rotation/translation on the positions of the tool stand reference members represented in the positional relationship 421 so that the measured positions of the tool stand reference members correspond to the positional relationship 421 stored in the memory. The control device 4 can identify the tool hold positions in the positional relationship 421 subjected to operations such that the positions of the tool stand reference members in the positional relationship 421 match the positions of the tool stand reference members in the measurement results best as the actual tool hold positions. At a rotation operation, the control device 4 may rotate the tool stand so as to keep the tool stand level. Such a limitation enables reducing the number of tool stand reference members required to identify the tool hold positions.

The control device 4 generates control information used to control the robot 1, using the tool hold positions identified based on the measurement results of the tool stand reference members (step S104 in FIG. 5). For example, the control device 4 may generate control information for causing the robot 1 to connect a tool held at the tool hold position identified based on the measurement results. The control information may be information obtained by correcting a prepared trajectory of the robot 1, based on the measurement results.

For example, the control device 4 generates control information for causing the robot 1 to move the moving portion 1M to where the moving portion is connectable to the tool T3 and to take a posture for connecting the tool T3. In this case, it can be said that the control information includes information on the position or posture of the robot 1.

The robot 1 may be held on a movable body, such as an automatic guided vehicle (AGV), a rail guided vehicle (RGV), or an autonomous mobile robot (AMR). In this case, the control device 4 may generate information for moving the robot 1 as control information. The information for moving the robot 1 may be, for example, information for moving the robot 1 to where the robot can take a posture that allows the moving portion 1M and the tool T3 to be connected. For example, when the position of the tool T3 is not within a predetermined range based on the position of the robot 1, the control information may include information for moving the robot 1 so that the position of the tool T3 is within the predetermined range.

The control device 4 may generate control information for causing the robot 1 to detach the tool T2. The control device 4 may generate control information for causing the robot 1 to detach the tool T2, and then generate control information for causing the robot to connect the tool T3. Alternatively, the control device 4 may generate control information for causing the robot 1 to detach the tool T2 and then to connect the tool T3. The control information for causing the robot 1 to detach the tool T2 and then to connect the tool T3 can also be referred to as control information for causing the robot 1 to interchange the currently connected tool with a different tool. In this case, the tool T3 is an example of a first tool, and the tool T2 is an example of a second tool. For example, the first tool may be a tool for processing, and the second tool may be a tool for measurement. Although the case where control information is sequentially generated has been described above, control information is not limited to sequentially generated information. Control information may be generated at a time, for example, using measurement results of the tool stand reference members or identification results of the tool hold positions.

The control information for causing the robot 1 to detach the connected tool T2 can also be referred to as control information for causing the tool T2 to be held at the tool hold position of the tool T2. In the case where the tool T2 is detached from the robot 1 and the tool T3 is connected, the position of the tool T3 for the case where the tool T3 is held by the tool holder H3 is an example of a first hold position, and the position of the tool T2 for the case where the tool T2 is held by the tool holder H2 is an example of a second hold position.

As measurement results, the measurement device 3 may output a first measurement result for the case where the tool T2 is connected to the robot 1 and a second measurement result for the case where the tool T2 is not connected to the robot 1. In this case, the control device 4 may generate control information for causing the robot 1 to detach the tool T2, based on the first measurement result. Further, the control device 4 may generate control information for causing the robot 1 to connect the tool T3, based on the second measurement result.

In this case, the measurement device 3 outputs a measurement result obtained by measuring tool stand reference members (e.g., tool stand reference members 2_{H2}-₁ and 2_{H2}-₂) as the first measurement result, and outputs a measurement result obtained by measuring other tool stand reference members (e.g., tool stand reference members 2_{P1}, 2_{P2}, and 2_{P3}) as the second result. The measurement device 3 may output the first measurement result and the second measurement result of the same tool stand reference members. In this case, the second measurement result may be the tool stand reference members moved after the measurement of the first measurement result.

In the case where the control device 4 generates control information for causing the robot 1 to detach the tool T2, the control device 4 may generate control information for the robot 1 to cause the detached tool T2 to be held at any of the tool hold positions. In this case, the control device 4 can determine the tool hold position closest to the tool hold position where the tool T3 to be connected to the robot 1 is held as the tool hold position where the tool T2 will be held. Alternatively, the control device 4 can determine a predetermined tool hold position for holding the tool T2 as the tool hold position where the tool T2 will be held. Alternatively, the control device 4 may determine a tool hold position where no tool is held as the tool hold position where the tool T2 will be held. The control device 4 may generate control information for operating the robot 1 so as to detach the tool T2 after the tool T2 is held on the tool stand P, or may generate control information for operating the robot 1 so that the tool T2 is held on the tool stand P2 after detaching the tool T2.

The tool connected to the robot 1 may be held at a position different from the tool stand P. The position different from the tool stand P may be, for example, a tool stand different from the tool stand P, or a robot different from the robot 1. In this case, the memory 42 stores a relative positional relationship between the tool stand reference members on the tool stand P and that position different from the tool stand P where the tool is held. The control device 4 generates control information for causing the robot 1 to connect the tool, based on the measurement results of the tool stand reference members. Alternatively, based on the measurement results of the tool stand reference members, the control device 4 may generate control information for causing the robot 1 to detach the tool connected to the robot 1 and then to connect the tool held at the position different from the tool stand P.

The tool stand reference members may be provided on the tool holders. More specifically, the reference members 2 may include a tool stand reference member 2_{H1} on the tool holder H1, tool stand reference members 2_{H2-1} and 2_{H2-2} on the tool holder H2, and tool stand reference members 2_{H3-1}, 2_{H3-2}, and 2_{H3-3} on the tool holder H3. It can be said that the tool stand reference members on the tool holders are provided at positions having a predetermined positional relationship with the tool hold positions THP1, THP2, and THP3 for holding the tools T1, T2, and T3. In the case where at least one tool stand reference member is provided on the tool holder, the other tool stand reference members may be provided on a portion of the tool stand P different from the tool holder.

The relative positions of the tool stand reference members with respect to a tool hold position for the case where a tool is held by the tool holder may be set based on the position of the tool holder. The positional relationship between the tool hold positions and the tool stand reference members is stored in the memory 42.

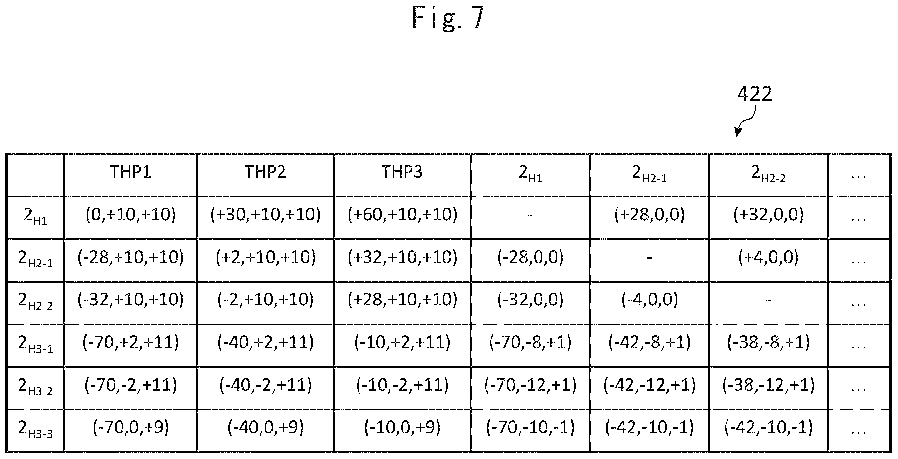

FIG. 7 is an example of a positional relationship between the tool stand reference members on the tool holders and the tool hold positions. The memory 42 stores the positional relationship 422.

In the positional relationship 422, each relative position is expressed as in the positional relationship 421 described above. The positional relationship 422 shows that, for example, the tool hold position THP1 is provided 0 to the right, 10 to the back, and 10 above the tool stand reference member 2_{H1}.

For example, the relative position of the tool stand reference member 2_{H1} with respect to the tool T1 for the case where the tool T1 is held by the tool holder H1 (front in FIG. 1) may be set based on the position of the tool holder H1. The relative positions of the tool stand reference members 2_{H3-1}, 2_{H3-2}, and 2_{H3-2} with respect to the tool T3 for the case where the tool T3 is held by the tool holder H3 (side surface in FIG. 1) may be set based on the position of the tool holder H3. The relative position of the tool stand reference member 2_{H1} on the tool holder H1 with respect to the position of a tool for the case where the tool is held by the tool holder H1 (tool hold position THP1) differs from the relative positions of the tool stand reference members 2_{H3-1}, 2_{H3-2}, and 2_{H3-3} on the tool holder H1 with respect to the position of a tool for the case where the tool is held by the tool holder H3 (tool hold position THP3). Further, the number of tool reference members on the tool holder H1 is 1 and differs from the number of tool reference members on the tool holder H3, which is 3.

This setting of the relative positions of the tool stand reference members based on the positions of the tool holders enables the control device 4 to limit the tool holder provided with tool stand reference members, based on the positions of the tool stand reference members measured by the measurement device 3, by referring to the positional relationship 422 between the tool holders and the tool stand reference members stored in the memory 42. For example, if the positions of the tool stand reference members of a tool holder are measured as being on a side surface, it can be determined that this tool holder is not the tool holder H1. In this case, the tool holder H1 is an example of a first holder, and the tool holder H3 is an example of a second holder.

The number of tool stand reference members on a tool holder may be set based on the position of the tool holder. For example, the number of tool stand reference members on the tool holder H1 may be set to 1, based on the position of the tool holder H1; the number of tool stand reference members on the tool holder H3 may be set to 3, based on the position of the tool holder H3.

This setting of the numbers of tool stand reference members based on the positions of the tool holders enables the control device 4 to limit the tool holder provided with tool stand reference members, based on the number of tool stand reference members measured by the measurement device 3, by referring to the numbers of tool stand reference members of the respective tool holders stored in the memory 42. For example, if three tool stand reference members of a tool holder are measured, it can be determined that this tool holder is not the tool holder H1. In this case, the tool holder H1 is an example of a first holder, and the tool holder H3 is an example of a second holder.

The tool holders may be provided with at least two tool stand reference members. For example, the tool holder H2 is provided with two tool stand reference member; the tool holder H3 is provided with three tool stand reference member. In this case, the relative positions of the tool stand reference members may be set based on the position of the tool holder. For example, the relative positions of the tool stand reference members 2_{H2-1} and 2_{H2-2} on the tool holder H2 (the two are aligned horizontally) may be set based on the position of the tool holder H2. In this case, the relative positions of the tool stand reference members on the tool holder H3 differ from the relative positions of the tool stand reference members on the tool holder H2.

This setting of the relative positions of the tool stand reference members based on the positions of the tool holders enables the control device 4 to limit the tool holder provided with tool stand reference members, based on the relative positions of the tool stand reference members measured by the measurement device 3, by referring to the relative positions of the tool stand reference members of the respective tool holders stored in the memory 42. For example, if two horizontally aligned tool stand reference members of a tool holder are measured, it can be determined that this tool holder is the tool holder H2.

As measurement results, the measurement device 3 may output a first measurement result obtained by measuring at least one tool stand reference member (e.g., tool stand reference members 2_{H2-1} and 2_{H2-2}) and a second measurement result obtained by measuring at least one other tool stand reference member (e.g., tool stand reference members 2_{H3}-₁, 2_{H3}-₂, and 2_{H3}-₃). In this case, the control device 4 generates control information for causing the robot 1 to detach the tool T2, based on the first measurement result. Further, the control device 4 generates control information for causing the robot 1 to connect the tool T3, based on the second measurement result.

The reference members 2 may be provided on the tools. More specifically, the reference members 2 may include a tool reference member 2_{T1} on the tool T1, tool reference members 2_{T2-1} and 2_{T2-2} on the tool T2, and tool reference members 2_{T3-1}, 2_{T3-2}, and 2_{T3-3} on the tool T3. The tools provided with the reference members 2 may be connected to the robot 1 or held at the tool hold positions. The measurement device 3 outputs measurement results obtained by measuring the positions of the tool reference members. When the reference members 2 are provided on the tools, the reference members 2 need not be provided on the tool stand including the tool holders. In this case, the measurement device 3 need not output the measurement results of the positions of the tool stand reference members. Further, the control device 4 may generate control information without using the measurement results of the positions of the tool stand reference members.

The control device 4 identifies the position of the tool, based on the measurement results of the tool reference members, and generates control information, using the identified position of the tool. For example, the control device 4 may generate control information for controlling the robot 1 so that the moving portion 1M of the robot 1 approaches the position of a tool held on the tool stand P and to be connected to the robot 1. The control information may be control information for causing the robot 1 to detach a connected tool, or control information for causing the robot 1 to connect a tool held on the tool stand P. The control information for causing the robot 1 to detach a connected tool may include information for causing the detached tool to be held at a tool hold position on the tool stand P. The control information for causing the robot 1 to detach a connected tool may be control information for moving the robot 1 so that the position of the connected tool and the tool hold position for holding the detached tool have a predetermined positional relationship. In this case, the tool hold position for holding the detached tool may be a tool hold position with the shortest distance to the tool hold position where a tool to be connected to the robot 1 after the tool is detached is held, or a predetermined tool hold position for holding the tool. The control information for causing the robot 1 to connect a tool may include information for moving the robot 1 to where the robot is connectable to the tool. The control information may be control information for causing the robot 1 to detach a connected tool and then to connect a tool held on the tool stand P to the robot 1. In other words, the control information may be control information for causing the robot 1 to interchange tools.

After a tool is connected to the robot 1 according to control information generated by the control device 4, the measurement device 3 may measure the positions of the tool reference members on this tool and output the measurement results.

The tools may be provided with at least two tool reference members. For example, the tool T2 is provided with two tool reference members; the tool T3 is provided with three tool reference members. The positional relationship between the tool reference members on the respective tools is stored in the memory 42.

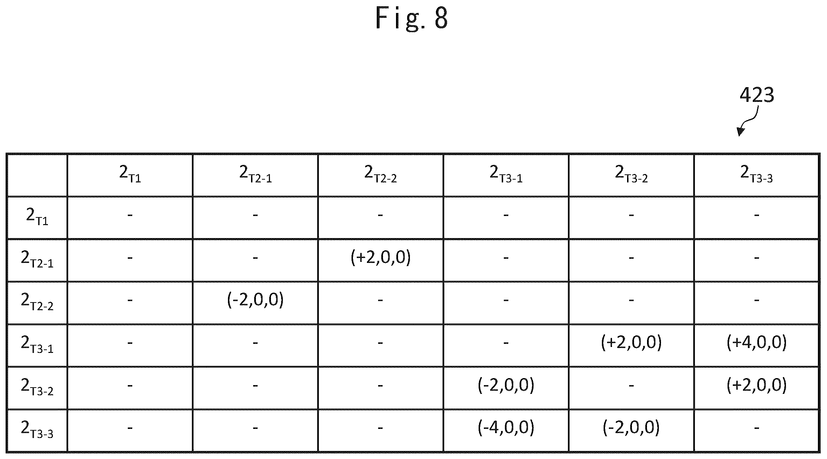

FIG. 8 is an example of a positional relationship between tool reference members on the tools. The memory 42 stores the positional relationship 423.

In the positional relationship 423, the positions of the tool reference members are expressed as in the positional relationship 421 described above. In the positional relationship 423, data of a tool provided with only one tool reference member may be omitted. The positional relationship 423 shows that, for example, on the tool T2, the tool reference member 2_{T2-2} is provided 2 to the right, 0 to the back, and 0 above the tool reference member 2_{T2-2}.

The relative positions of the tool reference members may be set based on the position of the tool holder. For example, the relative positions of the tool stand reference members 2_{H2-1} and 2_{H2-2} on the tool holder H2 (the two are aligned horizontally) may be set based on the position of the tool holder H2.

The control device 4 may identify the position and orientation of the tool, based on the measurement results of the tool reference members. For example, the memory 42 stores information that on the tool T2 two tool reference members are aligned horizontally in the side area below the connecting portion to be connected to the robot 1 when the connecting portion faces upwards. The control device 4 refers to the relative positions of the tool reference members of the respective tools stored in the memory 42; for example, when two horizontally aligned tool reference members are measured by the measurement device 3, the control device identifies the orientation of the tool T2 in which the connecting portion is above the detected positions of the tool reference members. In this case, the control device 4 generates control information, using the identified position and orientation of the tool.

The control device 4 may identify the tool, based on a measurement results of the tool reference members. The memory 42 stores information that on the tool T3 three tool reference members are arranged in the side area below the connecting portion to be connected to the robot 1 with two of them aligned horizontally and one arranged at the center above them when the connecting portion faces upwards. The control device 4 refers to the relative positions of the tool reference members of the respective tools stored in the memory 42; for example, when two horizontally aligned tool reference members and one tool reference member at the center above them are measured by the measurement device 3, the control device identifies this tool as the tool T3, based on the relative positions of the tool reference members. In this case, the control device 4 generates control information, using the result of identification of the tool.

The reference members 2 may be provided on the robot 1. In other words, the reference members 2 may include a robot reference member 2_{R1} on the robot 1. The robot reference member 2_{R1} is preferably provided on the moving portion 1M of the robot 1. The measurement device 3 outputs a measurement result obtained by measuring the position of the robot reference member.

The control device 4 generates control information, further based on the measurement result of the position of the robot reference member. For example, the control device 4 can generate control information for moving the moving portion 1M of the robot 1 to a tool hold position where a tool connected to the moving portion 1M and to be detached will be held, based on the measured position of the robot reference member. In other words, the control information generated further based on the measurement result of the position of the robot reference member may include information on the position of the robot.

If the robot 1 is provided with a plurality of robot reference members, the control device 4 can further identify the posture of the robot 1, based on the results of the positions of the robot reference members. In other words, the control information generated further based on the measurement results of the positions of the robot reference members may include information on the posture of the robot.

After a tool is connected to the robot 1, the measurement device 3 may output measurement results obtained by measuring the positions of the tool reference members on the tool and the robot reference member 2_{R1}. In this case, the control device 4 can generate information on the connection between the tool and the robot 1, based on these measurement results. The information on the connection between the tool and the robot 1 is, for example, information indicating whether the tool and the robot 1 are appropriately connected. The control device 4 can determine whether the tool and the robot 1 are appropriately connected, based on the interval between the tool and the robot 1 calculated based on the measurement results.

The control device 4 may further generate state information on the state of the reference member, based on the measurement results. In this case, the control device 4 corrects (modifies) the generated control information, based on the state information. This allows the robotic system 100 to control the robot 1 with higher accuracy.

The state information may include information on vibration of the reference member. The control device 4 can acquire time-series measurement results of the position of the reference member from the measurement device 3, and generate information on the changes in the reference member from the changes in the position of the reference member represented by the measurement results. The changes in the reference member indicate the vibration of the tool stand P if the reference member is a tool stand reference member, that of a tool if the reference member is a tool reference member, and that of the robot 1 if the reference member is a robot reference member.

The state information may include information on temperature around the reference member. The control device 4 can acquire a measurement result including the amount of infrared light around the reflected light from the measurement device 3, and generate information on temperature around the reference member from the amount of infrared light indicated by the measurement result. The temperature around the reference member indicates the temperature of the tool stand P if the reference member is a tool stand reference member, that of a tool if the reference member is a tool reference member, and that of the robot 1 if the reference member is a robot reference member.

The measurement device 3 may include a first measurement device (not shown) and a second measurement device (not shown) different from the first measurement device. The second measurement device may measure the positions of reference members, based on the measurement results of the positions of reference members by the first measurement device, and output the measurement results. The reference members to be measured by the first measurement device may be the same as or different from those to be measured by the second measurement device. The area of measurement by the first measurement device may be wider than that of measurement by the second measurement device. The accuracy of measurement by the first measurement device may be lower than that of measurement by the second measurement device. With such first and second measurement devices, highly accurate measurement results of the positions of reference members can be generated by the second measurement device, based on measurement results of the positions of reference members in a wide area by the first measurement device.

The coordinate system used for position information outputted by the measurement device 3 as measurement results may be the same as or different from the coordinate system used for operation of the robot 1. If the coordinate systems differ, the control device 4 may convert the coordinate system to generate control information.

The tool stand P may be held on a movable body such as an AGV. In this case, the control device 4 may generate tool stand control information used to control the position of the tool stand, instead of or in addition to the control information used to control the robot.

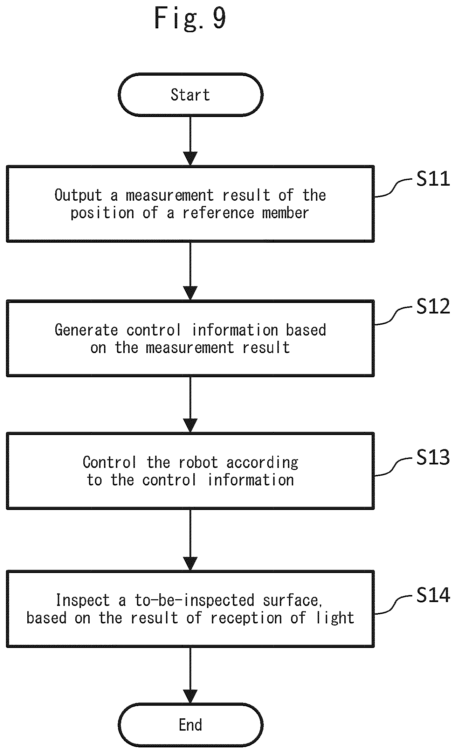

FIG. 9 is a flowchart of a control process. The robotic system 100 executes a control process on the robot 1 according to the flowchart described below. The robot 1 is capable of connecting and detaching any of at least one tool capable of performing a process on an object.

The measurement device 3 of the robotic system 100 measures the position of a reference member 2 and outputs the measurement result (step S11).

The reference member 2 herein is a tool stand reference member on a tool stand P capable of holding a tool. The reference member 2 may be a tool reference member on a tool. Alternatively, the reference member may be a robot reference member on the robot 1.

Next, the control device 4 of the robotic system 100 generates control information, based on the measurement result (step S12). The control information herein is information used to control the robot 1.

The control device 4 then controls the robot 1 according to the control information (step S13), and terminates the control process.

By executing the control process in this way, the robotic system 100 can control connection or detachment of a tool to or from the robot 1 appropriately.

The robotic system 100 can also be referred to as a control system that generates a control signal for controlling the robot 1, based on a measurement result of the position of the reference member.

The robotic system 100 can also be referred to as a positioning system that performs a positioning process to identify a destination for connection or detachment of a tool to or from the robot 1.

The robot 1 can be excluded from the robotic system 100 to configure a system including the reference members 2, the measurement device 3, and the control device 4. Such a system can be referred to as a measurement system that measures the positions of the reference members 2. Such a system can also be referred to as a control system that generates a control signal for controlling a robot, based on a measurement result of the position of a reference member.

The control device 4 may be integrated with the measurement device 3 or with the robot 1. A device that measures the positions of the reference members 2 in the same way as the measurement device 3 and that generates control information used to control the robot 1 based on measurement results in the same way as the control device 4 can control connection or detachment of a tool to or from the robot 1 appropriately in the same way as the robotic system 100 of the present embodiment. The control device 4 may also control the measurement device 3 to perform measurement and output the measurement results.

The robotic system 100 need not include the reference members 2. In this case, the measurement device 3 measures the position of a movable tool stand P that holds a tool and the position of the robot 1 capable of connecting and detaching the tool, and outputs the measurement results. The control device 4 generates tool stand control information used to control the position of the tool stand, based on the measurement results.

The plurality of tools to be connected to the robot 1 may be connected to the robot 1 in different orientations. For example, if the tool T1 is a tool that performs processing in contact with a workpiece, such as a drill or a milling cutter, and the tool T2 is an optical processing head (addition or removal), the relationship of the direction of a performing portion of the tool T1 (e.g., the direction of the rotation axis of the tool) with the orientation of its connection surface connected to the robot 1 may differ from the relationship of the direction of a processing beam from the tool T2 with the orientation of its connection surface connected to the robot 1.

The measurement device 3 need not measure the positions of the reference members 2 all the time. For example, when the reference members 2 are within the blind spot of the measurement device 3, the trajectory of the robot 1 may be estimated with a detector built in the robot 1, such as an encoder, or a detector attached to the outside of the robot (e.g., a gyro sensor) to control the robot 1; the measurement may be resumed at timing when the reference members 2 become measurable by the measurement device 3 (timing when the reference members 2 leave the blind spot of the measurement device 3) to control the robot 1.

Regarding the above embodiment, the following notes will be further disclosed.

### [Note A1]

A robotic system including:
a robot to which a tool capable of performing a process on an object is interchangeably attached;
at least one reference member on a tool stand capable of holding the tool;
a measurement device that measures the position of the reference member; and
a control device that generates information used to control the robot, based on the measurement result.

### [Note A2]

The robotic system according to note A1, wherein
the tool is capable of being held at a tool placement position on the tool stand, and
the tool placement position is provided at a position having a predetermined positional relationship with the at least one reference member.

### [Note A3]

The robotic system according to note A2, wherein
the control device identifies the tool placement position, based on the measurement result.

### [Note A4]

The robotic system according to note A3, wherein
the tool placement position is identified based on information on the tool stand obtained based on the result of the measurement.

### [Note A5]

The robotic system according to claim 3, wherein
the tool placement position is obtained based on information on the tool stand obtained based on the result of the measurement and information on the tool placement position on the tool stand.

### [Note A6]

The robotic system according to note A5, wherein
the information on the tool placement position is information on relative positions of the tool placement position and the reference member on the tool stand.

### [Note A7]

The robotic system according to any one of notes A1 to A6, wherein
the tool stand includes a tool holder capable of holding the tool, and
the at least one reference member is provided on the tool holder.

### [Note A8]

The robotic system according to note A7, wherein
the at least one reference member on the tool stand includes a plurality of reference members, and
at least one of the plurality of reference members is provided on the tool holder, and at least one other reference member is provided on a portion different from the tool holder

### [Note A9]

The robotic system according to note A6 or A7, wherein
at least one of the positions and number of the reference members on the tool holder is set based on the position of the tool holder.

### [Note A10]

The robotic system according to note A6 or A7, wherein
the tool holder includes a first holder and a second holder, and
the positions of the reference members on the first holder differ from the positions of the reference members on the second holder, or the number of the reference members on the first holder differs from the number of the reference members on the second holder.

### [Note A11]

The robotic system according to note A6 or A7, wherein
arrangement of the reference members on the tool holder is set based on the position of the tool holder.

### [Note A12]

The robotic system according to note A6 or A7, wherein
the tool holder includes a first holder and a second holder, and
arrangement of the reference members on the first holder differs from arrangement of the reference members on the second holder.

### [Note A13]

The robotic system according to any one of notes A1-A12, wherein
the control device moves the robot, based on the measurement result, and controls the robot to connect the tool held on the tool stand to the robot.

### [Note A14]

The robotic system according to note A13, wherein
the tool includes a first tool and a second tool, and
the control device moves the robot, based on the measurement result, controls the robot to detach the second tool different from the first tool and connected to the robot, and then causes the robot to connect the first tool.

### [Note A15]

The robotic system according to note A14, wherein
the at least one reference member on the tool stand includes a plurality of reference members,
the measurement result includes a first measurement result obtained using at least one of the plurality of reference members and a second measurement result obtained by measuring at least one other reference member,
the control device controls the robot to detach the second tool connected to the robot from the robot, based on the first measurement result, and then acquires the second measurement result, and
the control device controls the robot to connect the first tool to the robot, based on the second measurement result.

### [Note A16]

The robotic system according to note A14, wherein
the measurement result includes a first measurement result and a second measurement result,
the control device executes control to detach the second tool connected to the robot, based on the first measurement result,
after the second tool is detached from the robot, the measurement device measures a reference member different from a reference member measured in the first measurement result to acquire the second measurement result, and
the control device connects the first tool to the robot, based on the second measurement result.

### [Note A17]

The robotic system according to any one of notes A14 to A16, wherein
the tool stand has a plurality of tool placement positions for placing the tool,
the plurality of tool placement positions includes a first placement position, a second placement position, and a third placement position,
the first tool is placed at the first placement position, and
the control device controls the robot to place the second tool at one of the second and third placement positions that is closer to the first placement position.

### [Note A18]

The robotic system according to any one of notes A14 to A16, wherein
the tool stand has predetermined placement positions for the first tool and the second tool, and
the control device controls the robot so that the second tool is held at the predetermined placement position for the second tool.

### [Note A19]

The robotic system according to any one of notes A1 to A18, wherein
the tool is held at a position different from the tool stand, and
the control device moves the robot, based on the measurement result, causing the robot to connect the tool.

### [Note A20]

The robotic system according to note A19, wherein
the tool includes a first tool and a second tool,
the control device moves the robot, based on the measurement result, and executes control to detach the second tool connected to the robot and different from the first tool, and then
causes the robot to connect the first tool.

### [Note A21]

The robotic system according to any one of notes A1 to A18, wherein
the tool is connected to the robot, and
the control device controls the robot to detach the tool from the robot, based on the measurement result.

### [Note A22]

The robotic system according to note A21, wherein
the tool is provided with at least one tool reference member, and
the control device controls the robot to detach the tool connected to the robot, based on the positions of the at least one reference member on the tool stand and the at least one tool reference member that are obtained by measurement with the measurement device.

### [Note A23]

The robotic system according to any one of notes A14-A18 and A20, wherein
the second tool is provided with at least one tool reference member,
the measurement device is capable of measuring the position of the at least one tool reference member, and
based on the positions of the at least one reference member on the tool stand and the at least one tool reference member that are obtained by measurement with the measurement device, the control device controls the robot to detach the second tool connected to the robot, and then causes the robot to connect the first tool.

### [Note A24]

The robotic system according to any one of notes A14-A20, wherein
the tool is provided with at least one tool reference member, and
the position of the at least one tool reference member is measured by the measurement device after the tool is connected to the robot.

### [Note A25]

The robotic system according to any one of notes A1-A13, wherein
the tool is provided with at least one tool reference member, and
the control device generates information used to control the robot, based on a measurement result of a reference member on the tool stand and a reference member on the tool.

### [Note A26]

The robotic system according to any one of notes A21-A25, wherein the control device identifies the position of the tool, based on a measurement result of the tool reference member.

### [Note A27]

The robotic system according to any one of notes A21-A26, wherein the control device identifies the position and orientation of the tool, based on a measurement result of at least two tool reference members on the tool.

### [Note A28]

The robotic system according to any one of notes A21-A27, wherein the control device identifies the tool, based on a measurement result of at least two tool reference members on the tool.

### [Note A29]

A robotic system including:
a robot to which a tool capable of performing a process on an object is interchangeably attached;
at least one tool reference member on the tool;
a measurement device that measures the position of the reference member; and
a control device that generates information used to control the robot, based on the measurement result.

### [Note A30]

The robotic system according to note A29, wherein the control device identifies the position of the tool, based on the measurement result.

### [Note A31]

The robotic system according to note A29 or A30, wherein
the tool includes at least two reference members, and
the control device identifies the position and orientation of the tool, based on a measurement result of the at least two reference members.

### [Note A32]

The robotic system according to any one of notes A29-A31, wherein
the tool includes at least two reference members, and
the control device identifies the tool, based on a measurement result of the at least two reference members.

### [Note A33]

The robotic system according to note A32, wherein the tool is identified based on information on arrangement of the at least two reference members obtained based on the measurement result.

### [Note A34]

The robotic system according to any one of notes A29-A33, wherein the control device moves the robot, based on the result of the measurement, causing the robot to connect the tool.

### [Note A35]

The robotic system according to note A34, wherein
the tool includes a first tool and a second tool different from the first tool,
the second tool is connected to the robot, and
the control device moves the robot, based on the measurement result, controls the robot to detach the second tool, and then causes the robot to connect the first tool.

### [Note A36]

The robotic system according to note A35, wherein
a tool stand capable of holding the first and second tools has a plurality of tool placement positions for holding the tool, and
the control device controls the robot so that the second tool is held at one of the plurality of tool placement positions that is close to the first tool.

### [Note A37]

The robotic system according to note A36, wherein
the tool stand has predetermined placement positions for the first tool and the second tool, and
the control device causes the detached second tool to be held at the predetermined placement position for the second tool.

### [Note A38]

The robotic system according to any one of notes A35-A37, wherein the control device moves the robot so that a tool placement position for holding the second tool and the position of the second tool attached to the robot have a predetermined positional relationship.

### [Note A39]

The robotic system according to any one of notes A35-A38, wherein the control device identifies the position of the second tool, based on the measurement result.

### [Note A40]

The robotic system according to any one of notes A35-A39, wherein
the second tool includes at least two reference members, and
the control device identifies the position and orientation of the tool, based on a measurement result of the at least two reference members.

### [Note A41]

The robotic system according to any one of notes A35-A40, wherein
the second tool includes at least two reference members, and
the control device identifies the tool, based on a measurement result of the at least two reference members.

### [Note A42]

The robotic system according to any one of notes A35-A41, wherein
the second tool includes at least one reference member, and
the control device moves the robot to detach the second tool from the robot, based on a measurement result of the second tool.

### [Note A43]

The robotic system according to any one of notes A34-A42, wherein after the tool is connected to the robot, the control device measures the position of the at least one reference member on the tool, using the measurement device.

### [Note A44]

The robotic system according to any one of notes A29-A33, wherein
the tool is connected to the robot, and
the control device generates information for controlling the robot, based on the result of measurement of the position of the at least one reference member on the tool with the measurement device.

### [Note A45]

The robotic system according to note A44, wherein the control device controls operation for interchanging the tool connected to the robot with another tool, based on the result of measurement of the at least one reference member on the tool.

### [Note A46]

The robotic system according to any one of notes A35-A43, wherein
the robot is provided with at least one robot reference member, and
after the tool is connected to the robot, the control device measures the at least one tool reference member on the tool and the at least one robot reference member on the robot, using the measurement device.

### [Note A47]

The robotic system according to note A46, wherein the control device acquires information on connection between the first tool and the robot, based on the result of measurement of the at least one tool reference member and the at least one robot reference member with the measurement device

### [Note A48]

The robotic system according to any one of notes A1-A47, wherein
the robot is provided with at least one robot reference member, and
the control device generates information for controlling the robot, based on the result of measurement of the at least one robot reference member with the measurement device.

### [Note A49]

The robotic system according to any one of notes A1-A48, wherein the control device acquires information on the state of the reference member, based on the measurement result, and corrects control information, based on the information on the state.

### [Note A50]

The robotic system according to note A49, wherein the information on the state includes information on vibration of the reference member.

### [Note A51]

The robotic system according to note A49, wherein the information on the state includes information on temperature around the reference member.

### [Note A52]

The robotic system according to any one of notes A1-A51, wherein the control device acquires information on the state of the tool reference member, based on the measurement result, and corrects control information, based on the information on the state.

### [Note A53]

The robotic system according to note A52, wherein the information on the state includes information on vibration of the tool reference member.

### [Note A54]

The robotic system according to note A52, wherein the information on the state includes information on temperature around the tool reference member.

### [Note A55]

The robotic system according to any one of notes A1-A53, wherein the control device acquires information on the state of the robot reference member, based on the measurement result, and corrects control information, based on the information on the state.

### [Note A56]

The robotic system according to note A55, wherein the information on the state includes information on vibration of the robot reference member.

### [Note A57]

The robotic system according to note A55, wherein the information on the state includes information on temperature around the robot reference member.

### [Note A58]

The robotic system according to notes A1-A54, wherein information on the control includes information on the position or posture of the robot.

### [Note A59]

The robotic system according to any one of notes A1-A28 and A36-A58, wherein the tool stand is placed on a movable body.

### [Note A60]

The robotic system according to any one of notes A1-A59, wherein the tool is a tool capable of performing processing or measurement on the object.

### [Note A61]

The measurement system according to notes A1-A60, wherein
the measurement device includes a first measurement device and a second measurement device different from the first measurement device, and
the first measurement device measures the position of the reference member, based on the result of position measurement of the reference member by the second measurement device.

### [Note A62]

The measurement system according to notes A1-A61, wherein
the measurement device includes a first measurement device and a second measurement device different from the first measurement device, and
the first measurement device measures the position of the tool reference member, based on the result of position measurement of the tool reference member by the second measurement device.

### [Note A63]

The measurement system according to notes A1-A61, wherein
the measurement device includes a first measurement device and a second measurement device different from the first measurement device, and
the first measurement device measures the position of the robot reference member, based on the result of position measurement of the robot reference member by the second measurement device.

### [Note A64]

The robotic system according to any one of notes A1-A63, wherein the measurement device measures the position of the reference member by irradiating the reference member with laser light and receiving laser light reflected by the reference member.

### [Note A65]

The robotic system according to any one of notes A1-A63, wherein the measurement device measures the position of the tool reference member by irradiating the tool reference member with laser light and receiving laser light reflected by the tool reference member.

### [Note A66]

The robotic system according to any one of notes A1-A63, wherein the measurement device measures the position of the robot reference member by irradiating the robot reference member with laser light and receiving laser light reflected by the robot reference member.

### [Note A67]

A measurement system including:
at least one reference member on a tool stand capable of holding a tool, the tool being connectable to a robot and capable of performing a process on an object while connected to the robot;
a measurement device that measures the position of the reference member; and
a control device that generates information used to control the robot, based on the measurement result.

### [Note A68]

The measurement system according to note A67, including
a tool stand provided with at least one reference member, wherein
the control device generates information used to control the robot, based on the measurement result.

### [Note A69]

The measurement system according to note A67 or A68, wherein the control device generates control information for moving the robot based on the measurement result and causing the robot to connect the tool held on the tool stand.

### [Note A70]

The measurement system according to note A69, wherein
the tool includes a first tool and a second tool different from the first tool and connected to the robot, and
the control device generates control information for moving the robot based on the measurement result, controlling the robot to detach the second tool, and then causing the robot to connect the first tool.

### [Note A71]

A measurement system including:
at least one reference member on a tool connected to a robot and capable of performing a process on an object;
a measurement device that measures the position of the reference member; and
a control device that generates information used to control the robot, based on the measurement result.

### [Note A72]

The measurement system according to note A71, wherein the control device generates control information for moving the robot based on the result of the measurement and causing the robot to connect the tool.

### [Note A73]

The measurement system according to note A71, wherein
the tool includes a first tool and a second tool different from the first tool and connected to the robot, and
the control device generates control information for moving the robot based on the measurement result, controlling the robot to detach the second tool, and then causing the robot to connect the first tool.

### [Note A74]

A robotic system including:
a robot to which a tool capable of performing a process on an object is interchangeably attached;
a tool stand that is movable with the tool held thereon;
a measurement device that measures the positions of the tool stand and the robot; and
a control device that generates control information for controlling the position of the tool stand, based on a measurement result by the measurement device.

### [Note A75]

A robotic system including:
a robot to which a tool capable of performing a process on an object is interchangeably attached;
at least one reference member on a tool stand capable of holding the tool;
a measurement device that measures the position of the reference member;
at least one processor; and
a memory including at least one computer program code, wherein
together with the at least one processor, the at least one memory and the computer program code are configured to control the robot, and
the processor generates information used to control the robot, based on the measurement result.

### [Note A76]

A measurement system including: a robot;
at least one reference member on a tool stand capable of holding a tool, the tool being attached to the robot and capable of performing a process on an object;
a measurement device that measures the position of the reference member;
at least one processor; and
a memory including at least one computer program code, wherein
together with the at least one processor, the at least one memory and the computer program code are configured to control the robot, and
the processor generates information used to control the robot, based on the measurement result.

### [Note A77]

The robotic system according to notes A1-A76, wherein
the tool stand includes an attaching portion for attaching the tool, and
the tool is attached to the attaching portion from above.

### [Note A78]

The robotic system according to notes A1-A77, wherein
the tool stand includes an attaching portion for attaching the tool, and
the tool is attached to the attaching portion from below.

### [Note A79]

The robotic system according to notes A1-A78, wherein
the tool stand includes an attaching portion for attaching the tool, and
the tool is suspended from the attaching portion.

### [Note B1]

A robotic system including:
a robot capable of performing a predetermined process on a target by any of at least one tool being connected;
a measurement device that measures the position of each target member provided at each of at least one position having a predetermined positional relationship with the position of the tool placed on a tool stand; and
a control device that identifies the position of the tool, based on the result of the measurement.

### [Note B2]

The robotic system according to note B1, wherein
the robot includes a connecting portion configured to be connectable to the tool and movable within a predetermined range based on the position of the robot, and
the control device moves the connecting portion, based on the position of the robot and the identified position of the tool, so that the identified position of the tool is a destination, and connects the tool to the connecting portion.

### [Note B3]

The robotic system according to note B2, wherein when the identified position of the tool is not within the predetermined range, the control device moves the robot so that the identified position of the tool is within the predetermined range.

### [Note B4]

The robotic system according to any one of notes B1-B3, wherein at least one of the at least one position is set on the tool stand, and
the control device identifies the position of the tool, based on the position of the tool stand identified as a result of the measurement and predetermined tool stand placement information indicating a relative position where the tool is placed on the tool stand.

### [Note B5]

The robotic system according to note B4, wherein the at least one position set on the tool stand is set so that the number of positions observable from a first direction differs from the number of positions observable from a second direction different from the first direction.

### [Note B6]

The robotic system according to any one of notes B1-B5, wherein the tool is placed on a tool holder capable of holding the tool on the tool stand in a predetermined position and orientation,
at least one of the at least one position is set on the tool holder, and
the control device identifies the position of the tool, based on the position of the tool holder identified as a result of the measurement and predetermined tool holder placement information indicating a relative position where the tool is placed on the tool holder.

### [Note B7]

The robotic system according to any one of notes B1-B6, wherein at least one of the at least one position is set on the tool.

### [Note B8]

The robotic system according to note B6 or B7, wherein
the at least one tool includes a plurality of tools,
the plurality of tools capable of performing different processes is placed on the tool stand,
for each of the plurality of tools, the target member is provided at the at least one position, and
each of the plurality of tools has a different arrangement pattern of the at least one position where the target member is provided.

### [Note B9]

The robotic system according to note B8, wherein
the control device identifies one of the plurality of tools, based on an arrangement pattern formed by the position of at least one of the target members measured by the measurement device.

### [Note B10]

The robotic system according to any one of notes B6-B9, wherein
the tools including a first tool for performing a first process and a second tool for performing a second process different from the first process are placed on the tool stand,
the measurement device measures the position of each target member provided at each of at least one position having a predetermined positional relationship with the first tool,
the control device
   identifies the position of the first tool, based on the result of the measurement,
   moves the connecting portion of the robot to the identified position of the first tool,
   connects the first tool to the connecting portion,
   causes the robot to perform the first process on the target,
   moves the connecting portion of the robot to the identified position of the first tool, and
   detaches the first tool connected to the connecting portion from the connecting portion and places the first tool on the tool stand,
the measurement device measures the position of each target member provided at each of at least one position having a predetermined positional relationship with the second tool, and
the control device
   identifies the position of the second tool, based on the result of the measurement,
   moves the connecting portion of the robot to the identified position of the second tool,
   connects the second tool to the connecting portion, and
   causes the robot to perform the second process on the target.

### [Note B11]

The robotic system according to note B10, wherein the first process is measurement, and the second process is processing.

### [Note B12]

The robotic system according to notes B1-B11, wherein the control device moves the connecting portion so that the connecting portion approaches the identified position of the tool along a direction in which the connecting portion is connected to the tool.

### [Note B13]

The robotic system according to any one of notes B1-B12, wherein
the target member is a member that reflects light in a direction in which the light is incident, and
the measurement device measures the position of the target member by irradiating the target member with laser light and receiving laser light reflected by the target member.

### [Note B14]

The robotic system according to any one of notes B1-B13, wherein the target member is provided at each of two or more positions each having a predetermined positional relationship with the tool.

### [Note B15]

A robotic system including:
a robot capable of performing a predetermined process on a target by a tool being connected;
a measurement device that measures the position of at least one of the tool placed on a tool stand and the tool stand; and
a control device that operates the robot, based on the result of the measurement, so that the tool is connected to the robot.

### [Note B16]

A positioning method including:
measuring the position of at least one target member provided at each of at least one position having a predetermined positional relationship with the position of a tool placed on a tool stand; and
identifying the position of a destination of a connecting portion of a robot, based on the result of the measurement, the robot being capable of performing a predetermined process on a target by the tool being connected to the connecting portion.

### [Note B17]

The positioning method according to note B16, further including:
moving the connecting portion to the identified position of the tool; and
connecting the tool to the connecting portion.

### [Note B18]

A positioning method including:
measuring the position of at least one target member provided at each of at least one position having a predetermined positional relationship with the position of a tool placed on a tool stand; and
identifying the position of the tool, based on the result of the measurement.

### [Note B19]

The positioning method according to note B18, further including:
moving a connecting portion of a robot to the identified position of the tool, the robot being capable of performing a predetermined process on a target by the tool being connected to the connecting portion; and
connecting the tool to the connecting portion.

It should be noted that those skilled in the art can make various changes, substitutions, and modifications without departing from the spirit and scope of the present disclosure.

### REFERENCE SIGNS LIST

- 100: robotic system
- 1: robot
- 2: reference member
- 3: measurement device
- 4: control device
- 431: generation unit
- 432: control unit
- P: tool stand
- H: tool holder
- T: tool

## Claims

1. A robotic system comprising:
a robot capable of connecting and detaching any of at least one tool capable of performing a process on an object;
at least one reference member including at least one tool stand reference member on a tool stand capable of holding any of the at least one tool;
a measurement device that outputs a measurement result obtained by measuring the position of each tool stand reference member; and
a control device that generates control information used to control the robot, based on the measurement result.

2. The robotic system according to claim 1, wherein
the tool stand is capable of holding each tool at each of at least one tool hold position, and
each tool hold position is provided at a position having a predetermined positional relationship with each tool stand reference member.

3. The robotic system according to claim 2, wherein the control device identifies each tool hold position, based on the measurement result, and generates the control information, using each identified tool hold position.

4. The robotic system according to claim 3, wherein the control device identifies the tool hold position, based on information on the tool stand obtained based on the measurement result.

5. The robotic system according to claim 3, wherein the control device identifies each tool hold position, based on information on the tool stand obtained based on the measurement result and predetermined information on each tool hold position on the tool stand.

6. The robotic system according to claim 5, wherein the predetermined information on the tool hold position is information on a relative position of each tool hold position with respect to the tool stand reference member.

7. The robotic system according to any one of claims 1-6, wherein
the tool stand includes a tool holder capable of holding the at least one tool, and
any of the at least one tool stand reference member is provided on the tool holder.

8. The robotic system according to claim 7, wherein
the at least one tool stand reference member on the tool stand includes at least two tool stand reference members, and
at least one of the at least two tool stand reference members is provided on the tool holder, the other(s) of the at least two tool stand reference members being provided on a portion of the tool stand different from the tool holder.

9. The robotic system according to claim 7 or 8, wherein at least one of a relative position of each tool stand reference member with respect to the position of any of the at least one tool for the case where the tool is held by the tool holder and the number of the tool stand reference members on the tool holder is set based on the position of the tool holder.

10. The robotic system according to claim 9, wherein
the tool holder includes a first holder and a second holder,
each of the first holder and the second holder is provided with the at least one tool stand reference member, and
at least one of a relative position of each tool stand reference member on the first holder with respect to the position of any of the at least one tool for the case where the tool is held by the first holder and a relative position of each tool stand reference member on the second holder with respect to the position of any of the at least one tool for the case where the tool is held by the second holder and the number of the at least one tool stand reference member on the first holder and the number of the at least one tool stand reference member on the second holder differ from each other.

11. The robotic system according to any one of claims 7-10, wherein the at least one tool stand reference member on the tool holder includes at least two tool stand reference members, and
relative positions of the at least two tool stand reference members are set based on the position of the tool holder.

12. The robotic system according to claim 11, wherein
the tool holder includes a first holder and a second holder,
each of the first holder and the second holder is provided with the at least two tool stand reference members, and
relative positions of the at least two tool stand reference members on the first holder differ from relative positions of the at least two tool stand reference members on the second holder.

13. The robotic system according to any one of claims 1-12, wherein the control device generates the control information for connecting any of the at least one tool held on the tool stand to the robot, based on the measurement result.

14. The robotic system according to claim 13, wherein the control information for connecting any of the at least one tool held on the tool stand to the robot includes the control information for moving the robot.

15. The robotic system according to claim 13, wherein
the tool includes a first tool held on the tool stand and a second tool different from the first tool and connected to the robot, and
based on the measurement result, the control device generates the control information for causing the robot to detach the second tool, and then generates the control information for causing the robot to connect the first tool.

16. The robotic system according to claim 15, wherein the control device generates the control information for operating the robot so as to detach the second tool after the second tool is held on the tool stand.

17. The robotic system according to claim 15, wherein the control device generates the control information for operating the robot so that the second tool is held on the tool stand after detaching the second tool.

18. The robotic system according to any one of claims 15-17, wherein
the control device generates the control information for causing the robot to detach the second tool, based on a first measurement result that is the measurement result for the case where the second tool is connected to the robot,
the measurement device outputs a second measurement result that is the measurement result for the case where the second tool is not connected to the robot, and
the control device generates the control information for causing the robot to connect the first tool, based on the second measurement result.

19. The robotic system according to claim 18, wherein
the at least one tool stand reference member on the tool stand includes at least two tool stand reference members,
the first measurement result is the measurement result obtained by measuring at least one tool stand reference member of the at least two tool stand reference members, and
the second measurement result is the measurement result obtained by measuring at least one tool stand reference member other than the at least one tool stand reference member of the at least two tool stand reference members.

20. The robotic system according to any one of claims 15-19, wherein
the tool stand is capable of holding each tool at each of at least two tool hold positions, and
the control device generates the control information for the robot to cause to the second tool be held at a tool hold position with the shortest distance from a tool hold position where the first tool is held among the at least two tool hold positions.

21. The robotic system according to any one of claims 15-19, wherein
the tool stand is capable of holding each tool at each of at least one tool hold position,
the tool hold position includes a first hold position for holding the first tool and a second hold position for holding the second tool, and
the control device generates the control information for the robot to cause the second tool to be held at the second hold position.

22. The robotic system according to any one of claims 1-21, wherein
any of the at least one tool is held at a position different from the tool stand, and
the control device generates the control information for causing the robot to connect the tool, based on the measurement result.

23. The robotic system according to claim 22, wherein
the at least one tool includes a first tool held at a position different from the tool stand and a second tool different from the first tool and connected to the robot, and
based on the measurement result, the control device generates the control information for causing the robot to detach the second tool and then to connect the first tool.

24. The robotic system according to any one of claims 1-20, wherein
any of the at least one tool is connected to the robot, and
the control device generates the control information for causing the robot to detach the tool, based on the measurement result.

25. The robotic system according to any one of claims 1-23, wherein
the at least one reference member further includes at least one tool reference member on the tool,
the measurement device further outputs a measurement result obtained by measuring the position of each tool reference member, and
the control device generates the control information, based on the measurement results of the positions of each tool stand reference member and each tool reference member.

26. The robotic system according to any one of claims 15-21 and 23, wherein
the at least one reference member further includes at least one tool reference member on the second tool,
the measurement device further outputs a measurement result obtained by measuring the position of each tool reference member, and
based on the measurement results of the positions of each tool stand reference member and each tool reference member, the control device generates the control information for causing the robot to detach the second tool and then to connect the first tool.

27. The robotic system according to any one of claims 1-26, wherein
the at least one reference member further includes at least one tool reference member on any of the at least one tool, and
the measurement device further outputs a measurement result obtained by measuring the position of each tool reference member on the tool after the tool is connected to the robot.

28. The robotic system according to any one of claims 25-27, wherein the control device identifies the position of the tool, based on the measurement result of the tool reference member, and generates the control information, using the identified position of the tool.

29. The robotic system according to any one of claims 23-28, wherein
the at least one reference member further includes at least two tool reference members on any of the at least one tool, and
the control device identifies the position and orientation of the tool, based on the measurement result of each tool reference member, and generates the control information, using the identified position and orientation of the tool.

30. The robotic system according to any one of claims 23-29, wherein
the at least one reference member further includes at least two tool reference members on any of the at least one tool, and
the control device identifies the tool, based on the measurement result of the position of each tool reference member, and generates the control information, using the result of the identification.

31. The robotic system according to any one of claims 1-30, wherein the control device controls the robot, using the control information.

32. A robotic system comprising:
a robot capable of connecting and detaching any of at least one tool capable of performing a process on an object;
at least one reference member including at least one tool reference member on any of the at least one tool;
a measurement device that outputs a measurement result obtained by measuring the position of each tool reference member; and
a control device that generates control information used to control the robot, based on the measurement result.

33. The robotic system according to claim 32, wherein the control device identifies the position of the tool, based on the measurement result, and generates the control information, using the identified position of the tool.

34. The robotic system according to claim 32 or 33, wherein
the at least one tool reference member on the tool includes at least two tool reference members, and
the control device identifies the position and orientation of the tool, based on the measurement result of the position of each tool reference member, and generates the control information, using the position and orientation of the tool.

35. The robotic system according to any one of claims 32-34, wherein
the tool is provided with at least two tool reference members, and
the control device identifies the at least one tool, based on the measurement result of the position of each tool reference member, and generates the control information, using the result of the identification.

36. The robotic system according to claim 35, wherein the control device identifies the tool, based on relative positions of the at least two tool reference members obtained based on the measurement result.

37. The robotic system according to any one of claims 32-36, wherein the control device generates the control information for causing the robot to connect the tool, based on the measurement result.

38. The robotic system according to claim 37, wherein the control information includes information for moving the robot to where the robot is connectable to the tool.

39. The robotic system according to claim 37 or 38, wherein
the at least one tool includes a first tool and a second tool different from the first tool and connected to the robot, and
based on the measurement result, the control device generates the control information for causing the robot to detach the second tool and then to connect the first tool.

40. The robotic system according to claim 39, wherein the first tool is held at any of at least two tool hold positions on a tool stand capable of holding the first tool and the second tool at the at least two tool hold positions, and
the control device generates the control information for the robot to cause to the second tool be held at a tool hold position with the shortest distance from a tool hold position where the first tool is held among the at least two tool hold positions.

41. The robotic system according to claim 39, wherein the control device generates the control information for the robot to cause the second tool to be held at a predetermined tool hold position for holding the second tool among at least two tool hold positions on a tool stand capable of holding the first tool and the second tool at the at least two tool hold positions.

42. The robotic system according to claim 40 or 41, wherein the control device generates the control information for moving the robot so that the position of the second tool attached to the robot and a tool hold position for holding the second tool among the at least two tool hold positions have a predetermined positional relationship.

43. The robotic system according to any one of claims 39-42, wherein the control device identifies the position of the second tool, based on the measurement result, and generates the control information, using the identified position of the second tool.

44. The robotic system according to any one of claims 39-43, wherein
the at least one reference member includes at least two tool reference members as the tool reference member,
the second tool is provided with at least two of the at least two tool reference members, and
the control device identifies the position and orientation of the second tool, based on the measurement result of the position of each tool reference member on the second tool, and generates the control information, using the identified position and orientation of the second tool.

45. The robotic system according to any one of claims 39-44, wherein
the at least one reference member includes at least two tool reference members as the tool reference member,
the second tool is provided with at least two of the at least two tool reference members, and
the control device identifies the second tool, based on the measurement result of the position of each tool reference member on the second tool, and generates the control information, using the result of the identification.

46. The robotic system according to any one of claims 39-45, wherein
the second tool is provided with at least one of the at least one tool reference member, and
the control device generates the control information for detaching the second tool from the robot, based on the measurement result of the position of each tool reference member on the second tool.

47. The robotic system according to any one of claims 37-46, wherein the measurement device outputs the measurement result obtained by measuring the position of each tool reference member after any of the at least one tool is connected to the robot.

48. The robotic system according to any one of claims 32-36, wherein any of the at least one tool is connected to the robot.

49. The robotic system according to claim 48, wherein the control device generates the control information for interchanging any of the at least one tool connected to the robot with a tool different from the tool, based on the measurement result.

50. The robotic system according to any one of claims 39-47, wherein
the at least one reference member further includes at least one robot reference member on the robot, and
after any of the at least one tool is connected to the robot, the measurement device outputs measurement results obtained by measuring the positions of each tool reference member on the tool and each robot reference member.

51. The robotic system according to claim 50, wherein the control device generates information on connection between the tool and the robot, based on the measurement results of the positions of each tool reference member on the tool and each robot reference member.

52. The robotic system according to any one of claims 1-49, wherein
the at least one reference member further includes at least one robot reference member on the robot,
the measurement device further outputs a measurement result obtained by measuring the position of each robot reference member, and
the control device generates the control information, further based on the measurement result of the position of each robot reference member.

53. The robotic system according to any one of claims 1-52, wherein the control device further generates state information on the state of the reference member, based on the measurement result, and corrects the generated control information, based on the state information.

54. The robotic system according to claim 53, wherein the state information includes information on vibration of the reference member.

55. The robotic system according to claim 53, wherein the state information includes information on temperature around the reference member.

56. The robotic system according to any one of claims 1-55, wherein the control information includes information on the position or posture of the robot.

57. The robotic system according to any one of claims 1-31 and 40-42, wherein the tool stand is held on a movable body.

58. The robotic system according to any one of claims 1-57, wherein the tool is a tool capable of performing processing or measurement on the object.

59. The robotic system according to any one of claims 1-58, wherein
the measurement device includes a first measurement device and a second measurement device different from the first measurement device, and
the second measurement device outputs a measurement result of the position of any of the at least one reference member, based on the measurement result of any of the at least one reference member by the first measurement device.

60. The robotic system according to any one of claims 1-59, wherein the measurement device measures the position of the reference member by irradiating the reference member with laser light and receiving laser light reflected by the reference member.

61. A measurement system comprising:
at least one tool stand reference member on a tool stand capable of holding any of at least one tool;
a measurement device that outputs a measurement result obtained by measuring the position of each tool stand reference member; and
a control device that generates control information based on the measurement result,
wherein
the tool is connectable to a robot and capable of performing a process on an object while connected to the robot, and
the control information is information used to control the robot.

62. The measurement system according to claim 61, further comprising a tool stand provided with the at least one tool stand reference member and holding any of the at least one tool.

63. The measurement system according to claim 61 or 62, wherein the control device generates the control information for causing the robot to connect any of the at least one tool, based on the measurement result.

64. The measurement system according to any one of claims 61 to 63, wherein
the at least one tool includes a first tool held on the tool stand and a second tool different from the first tool and connected to the robot, and
based on the measurement result, the control device generates the control information for causing the robot to detach the second tool and then to connect the first tool.

65. A measurement system comprising:
at least one tool reference member on any of at least one tool that is connectable to a robot and capable of performing a process on an object while connected to the robot;
a measurement device that outputs a measurement result obtained by measuring the position of each tool reference member; and
a control device that generates control information used to control the robot, based on the measurement result.

66. The measurement system according to claim 65, wherein the control device generates the control information for causing the robot to connect the tool, based on the measurement result.

67. The measurement system according to claim 65, wherein
the at least one tool includes a first tool and a second tool different from the first tool and connected to the robot, and
based on the measurement result, the control device generates the control information for causing the robot to detach the second tool and then to connect the first tool.

68. A robotic system comprising:
a robot capable of connecting and detaching a tool capable of performing a process on an object;
a movable tool stand that holds the tool;
a measurement device that outputs measurement results obtained by measuring the positions of the tool stand and the robot; and
a control device that generates tool stand control information used to control the position of the tool stand, based on the measurement results.

69. A robotic system comprising:
a robot capable of connecting and detaching a tool capable of performing a process on an object;
at least one reference member including at least one tool stand reference member on a tool stand capable of holding the tool;
a measurement device that outputs a measurement result obtained by measuring the position of each tool stand reference member; and
a control device including at least one processor and a memory storing at least one computer program code, the control device being configured to generate control information used to control the robot, based on the measurement result, by the at least one processor executing the at least one computer program code.

70. A robotic system comprising:
at least one tool stand reference member on a tool stand capable of holding a tool detached from a robot, the tool being capable of performing a process on an object while connected to the robot;
a measurement device that outputs a measurement result obtained by measuring the position of each tool stand reference member; and
a control device including at least one processor and a memory storing at least one computer program code, the control device being configured to generate control information used to control the robot, based on the measurement result, by the at least one processor executing the at least one computer program code.

71. The robotic system according to any one of claims 1-31 and 40-42, wherein the tool stand includes a holding portion capable of holding the tool so as to cover at least part of a lower side of the tool.

72. The robotic system according to any one of claims 1-31, 40-42, and 71, wherein the tool stand includes a holding portion capable of holding the tool so as to cover at least part of an upper side of the tool.

73. A control method comprising:
outputting a measurement result obtained by measuring the position of each of at least one tool stand reference member on a tool stand capable of holding any of at least one tool capable of performing a process on an object;
generating control information used to control a robot capable of connecting and detaching the tool, based on the measurement result; and
controlling the robot according to the control information.

74. A control method comprising:
outputting a measurement result obtained by measuring the position of each of at least one tool reference member on any of at least one tool;
generating control information used to control a robot capable of connecting and detaching the tool, based on the measurement result; and
controlling the robot according to the control information.

75. A measurement method comprising:
outputting a measurement result obtained by measuring the position of each of at least one tool stand reference member on a tool stand capable of holding any of at least one tool capable of performing a process on an object; and
generating control information used to control a robot capable of connecting and detaching the tool, based on the measurement result.

76. A measurement method comprising:
outputting a measurement result obtained by measuring the position of each of at least one tool reference member on any of at least one tool capable of performing a process on an object; and
generating control information used to control a robot capable of connecting and detaching the tool, based on the measurement result.

77. A control method comprising:
outputting measurement results obtained by measuring the position of a tool stand capable of holding any of at least one tool capable of performing a process on an object and the position of a robot capable of connecting and detaching the tool;
generating control information used to control the position of the tool stand, based on the measurement result; and
controlling the tool stand according to the control information.
